# EUROPÄISCHE PATENTSCHRIFT

(11) **EP 3 260 310 B1**
(45) Veröffentlichungstag und Bekanntmachung des Hinweises auf die Patenterteilung: **30.10.2019**
(21) Anmeldenummer: 17165644.0
(22) Anmeldetag: 10.04.2017
(51) Int. Cl.: B60C 17/04, B60C 17/00, B60C 19/12, B60C 5/14, B60C 17/06, B60C 17/10

(54) **FAHRZEUGLUFTREIFEN**
PNEUMATIC TYRES FOR A VEHICLE
PNEUMATIQUES DE VÉHICULE

(30) Priorität: 24.06.2016 DE 102016211330
(43) Veröffentlichungstag der Anmeldung: 27.12.2017
(73) Patentinhaber: Continental Reifen Deutschland GmbH, 30165 Hannover (DE)
(72) Erfinder: Fries, Volkmar, 30900 Wedemark (DE); Poland, Bridget, 30159 Hannover (DE)
(74) Vertreter: Finger, Karsten

(56) Entgegenhaltungen:
- WO-A1-02/068220
- WO-A1-2014/198432
- US-A- 4 096 898
- US-A- 4 186 042

## Beschreibung

Die Erfindung betrifft einen Fahrzeugluftreifen, welcher auf eine Felge mit einem sich auf der Felge abstützenden und in den Reifenhohlraum hineinragenden Notlaufring aufziehbar ist, mit einer Karkasse, einem Laufstreifen und einem wenigstens zwei Gürtellagen aufweisenden Gürtel, wobei der Fahrzeugluftreifen an seiner Innenfläche unterhalb des Laufstreifens ein zusätzliches Gummiprofil aufweist, welches über den Umfang des Fahrzeugluftreifens umläuft und auf welchem sich der Notlaufring im Notlauf abstützt, wobei die Dicke des zusätzlichen Gummiprofils in einem Bereich von 3,5 mm bis 12 mm liegt, gemessen an der Stelle größter Dicke des zusätzlichen Gummiprofils in radialer Richtung.

Ein vorgenannter Notlaufreifen ist aus der WO 02/068220 A1 bekannt. Die Dicke von 3,5 mm bis 12 mm ist wesentlich dicker als die Dicke der Innenschicht, welche üblicherweise zwischen 1 mm und 2 mm beträgt und welche in der nachfolgend zitierten DE 26 58 049 A das Maß für die Dicke des zusätzlichen Gummiprofils ist. Hierdurch ist der Innendurchmesser zwischen der Oberfläche des zusätzlichen Gummiprofils und der Auflagefläche des Notlaufringes verringert, wodurch die Relativbewegungen zwischen dem Gummiprofil und dem Notlaufring geringer sind, welches zu einer vorteilhaften verringerten Wärmeentwicklung und ebenfalls zu einer vorteilhaften geringeren mechanischen Beanspruchung führen.

Es sind verschiedene Systeme für den Notlauf bei Druckluftverlust eines Fahrzeugluftreifens bekannt.

Die DE 26 58 049 A offenbart ein Fahrzeugrad mit einem sich auf der Felge abstützenden Notlaufring im Reifenhohlraum. Im Notlauf kommt der Notlaufring auf der Innenfläche des Reifens unterhalb des Laufstreifens zur Auflage und stützt den Laufstreifen ab. Eine Weiterfahrt unter angemessener Fahrweise ist ermöglicht. In der vorgenannten Schrift ist ebenfalls offenbart, ein zusätzliches Gummiprofil an der Innenseite des Reifens im Bereich der Auflagefläche des Notlaufringes im Notlauf anzuordnen. Das zusätzliche Gummiprofil besteht aus einer Kautschukmischung, welche im Notlauf bei Relativbewegungen zwischen Notlaufring und zusätzlichem Gummiprofil nicht schmiert, Kräfte gut überträgt und somit das Fahren im Notlauf im Vergleich zum Abstützen des Notlaufringes auf die Innenschicht, erleichtert. Das zusätzliche Gummiprofil weist eine Dicke auf, welche der Dicke der Innenschicht entspricht. Bei PKW- und NFZ-Reifen ist dies üblicherweise eine Dicke der Innenschicht von 1 - 2 mm.

Es ist die Aufgabe der Erfindung, einen Fahrzeugluftreifen, welcher auf eine Felge mit einem sich auf der Felge abstützenden und in den Reifenhohlraum hineinragenden Notlaufring aufziehbar ist, mit verlängerter Notlaufstrecke bereitzustellen.

Diese Aufgabe wird gelöst,
indem die Breite des zusätzlichen Gummiprofils etwa der Breite der breitesten Gürtellage +/- 20 bis 30 mm entspricht. Hierdurch ist sichergestellt, dass der Notlaufring immer auf dem zusätzlichen Gummiprofil zur Abstützung kommt.

Vorteilhaft ist es, wenn die dem Reifeninnenraum zugewandt Oberfläche des zusätzlichen Gummiprofils eine Kontur aufweist, welche etwa gegengleich zur Kontur der Abstützfläche des Notlaufringes ist. Hierdurch findet eine optimale Kraftverteilung statt, wodurch die Haltbarkeit des Reifens weiter verbessert ist.

In einer bevorzugten Ausführung der Erfindung ist unterhalb des zusätzlichen Gummiprofils auf die Innenschicht verzichtet, jedoch erfolgt an den Kanten des Gummiprofils eine Überlappung von Innenschicht und zusätzlichem Gummiprofil. Das zusätzliche Gummiprofil weist aufgrund seiner ausreichenden Dicke eine geringe Luftpermeabilität auf und kann die weitestgehend luftdicht ausgeführte Innenschicht adäquat ersetzen. Um die Luftdichtigkeit sicherzustellen, überlappen jedoch die jeweiligen möglicherweise dünner ausgeführten Kanten des zusätzlichen Gummiprofils mit der Innenschicht. Zudem wird durch das Weglassen der Innenschicht im Bereich des Gummiprofils der Wärmehaushalt des Reifens positiv beeinflusst, denn die Innenschicht besteht aus einer sehr weichen Mischung mit hohem viskoelastischem Energieverlust, wodurch bei Vorhandensein der Innenschicht im Bereich des Gummiprofils eine ungünstige Wärmeentwicklung im Notlaufbetrieb entstehen würde. Weiterhin wäre die Mischung der Innenschicht ungünstig im Kontaktbereich mit dem Gummiprofil.

Der Fahrzeugluftreifen ist ein Nutzfahrzeugreifen, ein PKW- oder ein Vanreifen.

Weitere Vorteile und Einzelheiten der Erfindung werden an der einzigen Figur, welche ein schematisches Ausführungsbeispiel darstellt, näher erläutert.

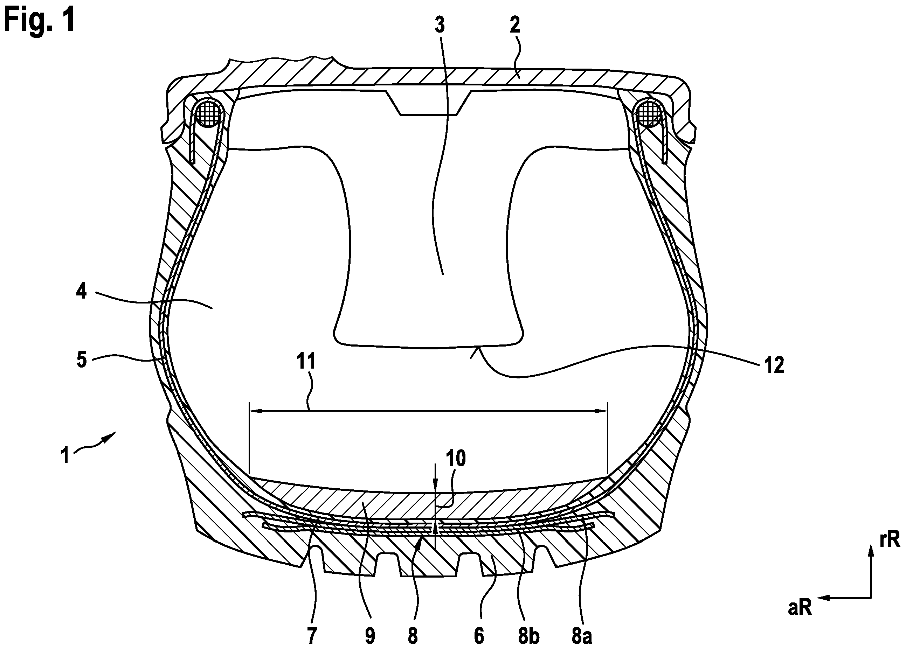

Die Figur 1 zeigt einen Querschnitt durch einen erfindungsgemäßen Fahrzeugluftreifen 1, welcher auf eine geeignete Felge 2 mit einem in den Reifenhohlraum 4 hineinragenden Notlaufring 3 aufgezogen ist. Der Fahrzeugluftreifen 1 weist eine Karkasse 5, einen Laufstreifen 6, eine Innenschicht 7 und einen wenigstens zwei Gürtellagen 8a, 8b aufweisenden Gürtel 8 auf. Der Fahrzeugluftreifen 1 weist an seiner Innenfläche unterhalb des Laufstreifens 6 ein zusätzliches Gummiprofil 9 auf, welches über den Umfang des Fahrzeugluftreifens 1 umläuft und auf welchem der Notlaufring 3 im Notlauf abstützt. Die Dicke 10 dieses zusätzlichen Gummiprofils 9 liegt in einem Bereich von 3,5 mm bis 12 mm, gemessen an der Stelle größter Dicke des zusätzlichen Gummiprofils in radialer Richtung rR. Die Breite 12 des zusätzlichen Gummiprofils 9 entspricht etwa der Breite der breitesten Gürtellage +/- 20 bis 30 mm. Die dem Reifeninnenraum 4 zugewandt3 Oberfläche des zusätzlichen Gummiprofils 9 weist eine Kontur auf, welche etwa gegengleich zur Kontur der Abstützfläche 12 des Notlaufringes 3 ist.

### Liste der Bezugszeichen

- 1: Fahrzeugluftreifen
- 2: Felge
- 3: Notlaufring
- 4: Reifenhohlraum
- 5: Karkasse
- 6: Laufstreifen
- 7: Innenschicht
- 8: Gürtel
- 8a: Gürtellage
- 8b: Gürtellage
- 9: Zusätzliches Gummiprofil
- 10: Dicke des zusätzlichen Gummiprofils
- 11: Breite des zusätzlichen Gummiprofils
- 12: Abstützfläche des Notlaufringes

- rR: radiale Richtung
- aR: axiale Richtung

## Patentansprüche

1. Fahrzeugluftreifen (1), welcher auf eine Felge (2) mit einem sich auf der Felge (2) abstützenden und in den Reifenhohlraum (4) hineinragenden Notlaufring (3) aufziehbar ist, wobei der Fahrzeugluftreifen eine Karkasse (5), einen Laufstreifen (6) und einen wenigstens zwei Gürtellagen (8a, 8b) aufweisenden Gürtel (8) aufweist und wobei der Fahrzeugluftreifen (1) an seiner Innenfläche unterhalb des Laufstreifens (6) ein zusätzliches Gummiprofil (9) aufweist, welches über den Umfang des Fahrzeugluftreifens umläuft und auf welchem sich der Notlaufring (3) im Notlauf abstützt wobei die Dicke (10) des zusätzlichen Gummiprofils (9) in einem Bereich von 3,5 mm bis 12 mm liegt, gemessen an der Stelle größter Dicke des zusätzlichen Gummiprofils in radialer Richtung, **dadurch gekennzeichnet, dass** die Breite (11) des zusätzlichen Gummiprofils (9) etwa der Breite der breitesten Gürtellage (8a) +/- 20 bis 30 mm, entspricht.

2. Fahrzeugluftreifen nach Anspruch 1, **dadurch gekennzeichnet, dass** die dem Reifeninnenraum (4) zugewandt Oberfläche des zusätzlichen Gummiprofils (9) eine Kontur aufweist, welche etwa gegengleich zur Kontur der Abstützfläche (12) des Notlaufringes (3) ist.

3. Fahrzeugluftreifen nach Anspruch 1 oder 2, **dadurch gekennzeichnet, dass** unterhalb des zusätzlichen Gummiprofils (9) auf die Innenschicht (7) verzichtet ist, jedoch an den Kanten des Gummiprofils eine Überlappung von Innenschicht (7) und zusätzlichem Gummiprofil (9) erfolgt.

## Claims

1. Pneumatic vehicle tyre (1), which is able to be fitted on a rim (2) with an emergency running ring (3) that is supported on the rim (2) and projects into the tyre cavity (4), wherein the pneumatic vehicle tyre has a carcass (5), a tread (6) and a belt (8) having at least two belt plies (8a, 8b), and wherein the pneumatic vehicle tyre (1) has, on its inner face beneath the tread (6), an additional rubber profile (9) which runs around the circumference of the pneumatic vehicle tyre and on which the emergency running ring (3) is supported in an emergency, wherein the thickness (10) of the additional rubber profile (9) is in a range from 3.5 mm to 12 mm, measured at the point of greatest thickness of the additional rubber profile in a radial direction, **characterized in that** the width (11) of the additional rubber profile (9) corresponds approximately to the width of the widest belt ply (8a) +/- 20 to 30 mm.

2. Pneumatic vehicle tyre according to Claim 1, **characterized in that** that surface of the additional rubber profile (9) that faces the tyre interior (4) has a contour which is approximately mirror-inverted with respect to the contour of the supporting face (12) of the emergency running ring (3).

3. Pneumatic vehicle tyre according to Claim 1 or 2, **characterized in that** the inner layer (7) is omitted beneath the additional rubber profile (9), but the inner layer (7) and additional rubber profile (9) overlap at the edges of the rubber profile.

## Revendications

1. Pneumatique de véhicule (1) qui peut être amené par traction sur une jante (2) au moyen d'un anneau de secours (3) en appui sur la jante (2) et saillant dans la cavité de pneumatique (4), le pneumatique de véhicule comportant une carcasse (5), une bande de roulement (6) et une nappe d'armature (8) pourvue d'au moins deux couches (8a, 8b) et le pneumatique de véhicule (1) comportant sur sa surface intérieure, au-dessous de la bande de roulement (6), un profilé en caoutchouc supplémentaire (9) qui tourne sur la périphérie du pneumatique de véhicule et sur lequel l'anneau de secours (3) s'appuie en mode de secours, l'épaisseur (10) du profilé en caoutchouc supplémentaire (9) étant dans la plage allant de 3,5 mm à 12 mm, mesurée à l'emplacement de l'épaisseur maximale du profilé en caoutchouc supplémentaire dans la direction radiale, **caractérisé en ce que** la largeur (11) du profilé en caoutchouc supplémentaire (9) correspond à peu près à la largeur de la couche la plus large (8a) de la nappe d'armature +/- 20 à 30 mm.

2. Pneumatique de véhicule selon la revendication 1, **caractérisé en ce que** la surface, dirigée vers l'espace intérieur (4) du pneumatique, du profilé en caoutchouc supplémentaire (9) présente un contour à peu près opposé au contour de la surface d'appui (12) de l'anneau de secours (3).

3. Pneumatique pour véhicule selon la revendication 1 ou 2, **caractérisé en ce que** la couche intérieure (7) sous le profilé en caoutchouc supplémentaire (9) est supprimée, mais un chevauchement de la couche intérieure (7) et du profilé en caoutchouc supplémentaire (9) est effectué au niveau des bords du profilé en caoutchouc.
